# EUROPÄISCHE PATENTANMELDUNG

(11) **EP 2 702 852 A2**
(43) Veröffentlichungstag der Anmeldung: **05.03.2014**
(21) Anmeldenummer: 13182011.0
(22) Anmeldetag: 28.08.2013
(51) Int. Cl.: A01D 34/73

(54) **Schneidvorrichtung für einen Rasenmäher**

(30) Priorität: 31.08.2012 AT 503502012
(71) Anmelder: Casazza, Wolfgang, 6320 Angerberg (AT)
(72) Erfinder: Casazza, Wolfgang, 6320 Angerberg (AT)
(74) Vertreter: Sonn & Partner Patentanwälte

(57) **Zusammenfassung**

Schneidvorrichtung (7) für einen Rasenmäher (1), mit einem an eine Abtriebswelle (3) eines Antriebs (2) anschließbaren Messerträger (8), welcher an einem äußeren Ende einen Leitflügel (12) aufweist, und mit einem Messer (9), welches an einem äußeren Endbereich einen Schneidabschnitt (1; 11', 11''1) aufweist, wobei das Messer (9) über eine lösbare Verbindung (10) an dem Messerträger (8) befestigt ist, wobei der Messerträger (8) einen von der Längsebene des Messerträgers (8) abgewinkelten, mit dem Leitflügel (12) verbundenen Übergangsbereich (13) aufweist und/oder das Messer (9) einen von der Längsebene des Messers (9) abgewinkelten, mit dem Schneidabschnitt (11; 11', 11'') verbundenen Übergangsbereich (13) aufweist, wobei jeweils zwischen dem Leitflügel (12) des Messerträgers (8) und dem Schneidabschnitt (11; 11', 11'') des Messers (9) ein Luftspalt (14) gebildet ist.

## Beschreibung

Die Erfindung betrifft eine Schneidvorrichtung für einen Rasenmäher, mit einem an eine Abtriebswelle eines Antriebs anschließbaren Messerträger, welcher an einem äußeren Ende einen Leitflügel aufweist, und mit einem Messer, welches an einem äußeren Endbereich einen Schneidabschnitt aufweist, wobei das Messer über eine lösbare Verbindung an dem Messerträger befestigt ist.

Weiters betrifft die Erfindung einen Rasenmäher mit einer an eine Abtriebswelle eines Antriebs angeschlossenen Schneidvorrichtung.

In der DE 199 25 605 A1 ist ein gattungsgemäßer Rasenmäher beschrieben. Der bekannte Rasenmäher weist einen Messerträger auf, welcher an einer Antriebswelle eines Verbrennungsmotors montiert ist. Der Messerträger trägt an seinen äußeren Enden jeweils ein Messer, welches jeweils mittels zweier Schrauben lösbar am Messerträger befestigt ist. Die Messer sind in Draufsicht dreieckig gestaltet. Darüber hinaus sind an den äußeren Enden des Messerträgers Lüfterschaufeln angebracht. Die Schaufeln bestehen aus einem zweischenkeligen Blechstück, dessen einer Schenkel zusammen mit dem Messer am Messerträger befestigt ist, während der andere Schenkel schräg nach oben steht.

Demnach ist aus dieser Druckschrift bereits ein Sichelmäher bekannt, bei welchem die Messer austauschbar an den Enden des Messerträgers befestigt sind. Diese Ausführung hat insbesondere den Vorteil, dass ein abgenutztes oder beschädigtes Messer durch ein neues Messer ersetzt werden kann, ohne den gesamten Messerträger austauschen zu müssen.

In der Praxis hat sich jedoch gezeigt, dass das Mähergebnis solcher Sichelmäher selbst bei einem neuwertigen Messer mit unverbrauchter Schneide unbefriedigend ist. Bisher traten insbesondere beim Mähen von nassem Gras beträchtliche Funktionseinbußen auf. Die bekannten Rasenmäher bewirken zudem nachteiligerweise eine starke Geräuschentwicklung.

Demnach hat die vorliegende Erfindung zum Ziel, eine Schneidvorrichtung der eingangs angeführten Art zu schaffen, mit welcher das Mähergebnis, insbesondere im Hinblick auf ein sauberes Schnittbild, verbessert wird. Zudem soll eine besonders geräuscharme Ausführung geschaffen werden.

Erfindungsgemäß weist der Messerträger einen von der Längsebene des Messerträgers abgewinkelten, mit dem Leitflügel verbundenen Übergangsbereich auf und/oder das Messer weist einen von der Längsebene des Messers abgewinkelten, mit dem Schneidabschnitt verbundenen Übergangsbereich auf, wobei jeweils zwischen dem Leitflügel des Messerträgers und dem Schneidabschnitt des Messers ein Luftspalt gebildet ist.

Aufgrund des von der Längsebene des Messerträgers abgebogenen Übergangsbereichs ist der daran anschließende Leitflügel zur Längsebene des Messerträgers versetzt angeordnet, wodurch zwischen dem Leitflügel und dem Messer ein Luftspalt geschaffen wird. Zur Ausbildung des Luftspalts kann alternativ das Messer einen von der Längsebene des Messers abgebogenen Übergangsbereich aufweisen. Schließlich können sowohl der Messerträger als auch das Messer in entgegengesetzte Richtungen abgewinkelte Übergangsbereiche aufweisen, um den Luftspalt zwischen dem Leitflügel und dem Messer auszubilden. Wenn die Schneidvorrichtung im Betrieb rotiert, wird der Luftspalt von einer gleichförmigen Luftströmung durchströmt, mit welcher ein beruhigender Effekt auf die an das Messer angrenzenden Luftschichten ausgeübt wird. Hiermit kann vorteilhafterweise die Qualität des Schnittbildes wesentlich verbessert werden. Aufgrund der gleichmäßigen Strömung durch den Luftspalt wird zudem das Schnittgut zuverlässig über den Leitflügel in Richtung des Auswurfs abgeleitet. Vorteilhafterweise kann hiermit auch die Auswurfrate des Schnittguts gesteigert werden, wodurch insgesamt ein besseres Mähergebnis erzielt wird. Besonders vorteilhaft wirkt sich die Ausbildung des Luftspalts beim Mähen von nassem Gras aus. Darüber hinaus hat die erfindungsgemäße Ausführung den Vorteil, dass die Betriebsgeräusche wesentlich reduziert werden können. Aufgrund der gleichförmigen Luftströmung durch den Luftspalt können einerseits Geräusche vermieden werden, welche beim Stand der Technik aufgrund von Turbulenzen im Bereich der Schneidkante entstehen. Andererseits trägt der Leitflügel erheblich zur Geräuschentwicklung bei. Bei der erfindungsgemäßen Ausführung kann der Leitflügel vorteilhafterweise vergleichsweise klein dimensioniert werden, da das Schnittgut schon bei vergleichsweise geringeren Bauhöhen des Leitflügels zuverlässig über die Oberseite des Leitflügels abtransportiert wird. Somit kann vorteilhafterweise auch die vom Leitflügel verursachte Komponente des Betriebslärms reduziert werden. Aufgrund der gleichmäßigen, starken Luftströmung im Luftspalt gelangt das Schnittgut nicht in den Luftspalt, sondern wird über den Luftspalt hinweggetragen, so dass der Luftspalt vor einer Verstopfung mit Schnittgut geschützt ist.

Gemäß einer besonders bevorzugten Ausführungsform ist zur Ausbildung des Luftspalts ivorgesehen, dass der Leitflügel des Messerträgers einen den Luftspalt nach unten begrenzenden ersten Schenkel aufweist, welcher sich vorzugsweise im Wesentlichen parallel zum Schneidabschnitt des Messers erstreckt, wobei der Leitflügel einen von dem den Luftspalt nach unten begrenzenden ersten Schenkel hochstehenden zweiten Schenkel aufweist. Im Rotationszustand der Schneidvorrichtung wird Luft durch den Luftspalt zwischen dem ersten Schenkel des Leitflügels und dem Schneidabschnitt des Messers geleitet. Aufgrund des Übergangsbereichs, mit welchem der Leitflügel von der Längsebene des Messerträgers abgehoben wird, entsteht innerhalb des Luftspalts eine gleichförmige Luftströmung, mit welcher das Schnittgut zuverlässig über die Oberseite des Leitflügels abgeführt wird. Durch eine solche Anordnung des Leitflügels wird eine gerade Luftströmung erzielt, mit welcher Luftturbulenzen zuverlässig vermieden werden können. Vorteilhafterweise kann damit der Lärmpegel im Betrieb des Rasenmähers reduziert werden. Überdies wird eine bessere Korbfüllung bei gleichmäßigerem Schnittbild erzielt. Ein weiterer Vorteil dieser Ausführung besteht darin, dass die Leistungsaufnahme des Motors aufgrund des niedrigeren Luftwiderstandes gesenkt werden kann, wodurch naturgemäß auch eine Kraftstoffersparnis erzielt wird. Demgegenüber ist aus dem Stand der Technik (vgl. US 5,259,176) zwar grundsätzlich ein Messerträger für einen Rasenmäher gezeigt, bei dem an den freien Enden zwischen einer ersten Schneidkante und einer zweiten Schneidkante eines unteren Schneidmessers ein Luftspalt ausgebildet ist; dabei ist jedoch die untere Schneidkante in einen nach oben gebogenen Leitabschnitt fortgesetzt, so dass nachteiligerweise eine Aufwärtsströmung bewirkt wird. Bei diesem Stand der Technik wird das Mähgut aufgrund des Luftstroms durch den Luftspalt und entlang des nach oben gebogenen Abschnitts gesaugt. Die Anbringung des nach oben gebogenen Leitabschnitts an der unteren Schneidkante gemäß Stand der Technik bringt insbesondere den Nachteil mit sich, dass im Betrieb starke Luftturbulenzen entstehen, welche bei der oben beschriebenen Ausführungsform zuverlässig verhindert werden können.

Zur Vermeidung von Turbulenzen im Bereich des Schneidabschnitts des Messers ist es günstig, wenn die Höhe des Luftspalts zwischen dem Leitflügel des Messerträgers und dem Schneidabschnitt des Messers mindestens 4 mm, vorzugsweise zwischen 4 mm und 16 mm, insbesondere im Wesentlichen 10 mm, beträgt. Vorteilhafterweise kann hiermit eine geradlinige, vorzugsweise im Wesentlichen laminare Strömung durch den Luftspalt erzielt werden, wodurch vorteilhafterweise das Schnittergebnis wesentlich verbessert werden kann. Demgegenüber würden bei einem geringeren Abstand nachteiligerweise Turbulenzen entstehen, welche negativen Einfluss auf Auswurfrate und Auswurfqualität des Rasenmähers nehmen könnten.

Zur Beruhigung der an den Schneidabschnitt des Messers angrenzenden Luftschichten ist es darüber hinaus von Vorteil, wenn die Erstreckung des Luftspalts in Längsrichtung des Messerträgers mindestens zwischen 30 mm und 60 mm, insbesondere im Wesentlichen 50 mm, beträgt. Aufgrund dieser Ausgestaltung wird im Rotationszustand des Messerträgers ein gleichförmiger Luftzug durch den Luftspalt ausgebildet, welcher sich vorteilhaft auf das Schnittergebnis auswirkt.

Um das vom Schneidabschnitt abgeschnittene Mähgut zuverlässig in Richtung eines Auswurfs zu befördern, ist es günstig, wenn zweite Schenkel des Leitflügels in einem Neigungswinkel von zwischen 100° und 140°, insbesondere von im Wesentlichen 120°, zum ersten Schenkel angeordnet ist. Der Neigungswinkel kann hierbei um ca. 3° vom angegebenen Wert abweichen.

Die Betriebsgeräusche können vorteilhafterweise besonders stark reduziert werden, wenn der zweite Schenkel des Leitflügels im Wesentlichen parallel zur Längsachse des Messerträgers angeordnet ist.

Hinsichtlich einer geräuscharmen Ausführung ist es zudem günstig, wenn der zweite Schenkel des Leitflügels eine Erstreckung senkrecht zur Längsebene des Messerträgers von weniger als 20 mm, vorzugsweise zwischen 4 mm und 20 mm, insbesondere im Wesentlichen 12 mm, aufweist. Aufgrund der Ausbildung des Luftspalts zwischen dem Leitflügel und dem Schneidabschnitt wird das Mähgut zuverlässig und präzise an den Leitflügel herangeführt. Vorteilhafterweise kann daher die Bauhöhe des zweiten Schenkels des Leitflügels gegenüber bekannten Ausführungen reduziert werden, ohne hierbei Funktionseinbußen zu verzeichnen. Die geringere Bauhöhe wirkt sich vorteilhaft auf den Geräuschpegel beim Betrieb des Rasenmähers aus.

Um das Messer im Fall von Beschädigungen oder Abnützungen auf einfache Weise austauschen zu können, ist es von Vorteil, wenn die lösbare Verbindung zwischen dem Messerträger und dem Messer eine Schraubverbindung aufweist. Vorteilhafterweise muss daher der Messerträger nicht ersetzt werden, wenn ein Austausch des Messers erforderlich wird. Hiermit können die Betriebskosten des Rasenmähers wesentlich reduziert werden. Vorzugsweise ist die Schraubverbindung als Sicherungsschraube ausgebildet, welche einem eigenständigen Lösen entgegenwirkt.
Vorzugsweise ist ein den Messerträger und das Messer durchsetzendes, bei einer definierten Scherbelastung brechendes Sicherungselement vorgesehen, so dass das Messer unter der Scherbelastung relativ zum Messerträger verschwenkbar ist. Vorteilhafterweise bewirkt die Anordnung des Sicherungselements, dass der Messerträger nicht beschädigt wird, wenn das Messer im Betrieb starken Scherkräften ausgesetzt wird. Solche Scherkräfte können insbesondere dann entstehen, wenn der Schneidabschnitt des Messers auf einen harten Gegenstand, beispielsweise einen Stein, trifft. In solchen Fällen bricht das Sicherungselement, womit die Verschwenkung des Messers relativ zum Messerträger freigegeben wird. Vorteilhafterweise wird daher das Messer im entsicherten Zustand des Sicherungselements vom Messerträger entkoppelt. Hiermit kann zuverlässig verhindert werden, dass die Aufprallkräfte über den Messerträger in die Abtriebswelle eingeleitet werden. Vorteilhafterweise wird daher der Antrieb des Rasenmähers geschont. Die Anordnung des Sicherungselements erhöht zudem die Sicherheit in der Bedienung des Rasenmähers. Beim Stand der Technik kann das Messer bei einem Aufprall auf ein Hindernis zersplittern. Aufgrund der Fliehkraftwirkung verlassen die abgebrochenen Messerteile den Rasenmäher mit hoher Geschwindigkeit, so dass ein beträchtliches Sicherheitsrisiko besteht. Demgegenüber bewirkt das Sicherungselement eine Nachgiebigkeit gegenüber den bei einem wuchtigen Aufprall entstehenden Kräften, so dass das Messer den Belastungen zerstörungsfrei standhalten kann. Wesentlich ist hierbei, dass das Sicherungselement bei einer definierten Belastung bricht, welche bei einem Aufprall des Messers auf ein hartes Hindernis hervorgerufen wird, wenn das Messer mit normaler Rotationsgeschwindigkeit rotiert. Demgegenüber weist die lösbare Halterung des Messers am Messerträger keine definierte Bruchgrenze auf. In jedem Fall liegt die Belastungsgrenze der lösbaren Verbindung wesentlich höher als die Bruchgrenze des Sicherheitselements, da aus Sicherheitsgründen unbedingt verhindert werden muss, dass sich das Messer bei einem Aufprall auf ein Hindernis zur Gänze vom Messerträger löst.

Die Anordnung des Sicherungselements kann bei verschiedenartigen Rasenmähern von Vorteil sein, bei welchen die Ausbildung des Luftspalts zwischen dem Messerträger und dem Messer keine Voraussetzung ist.
Demnach betrifft die Erfindung auch eine Schneidvorrichtung für einen Rasenmäher, mit einem an eine Abtriebswelle eines Antriebs anschließbaren Messerträger, welcher an einem äußeren Ende einen Leitflügel aufweist, und mit einem Messer, welches an einem äußeren Endbereich einen Schneidabschnitt aufweist, wobei das Messer über eine lösbare Verbindung an dem Messerträger befestigt ist, **dadurch gekennzeichnet, dass** ein den Messerträger und das Messer durchsetzendes, bei einer definierten Scherbelastung brechendes Sicherungselement vorgesehen ist, so dass das Messer unter der Scherbelastung relativ zum Messerträger verschwenkbar ist.

Zur Festlegung einer definierten Bruchgrenze des Sicherungselements ist es günstig, wenn das Sicherungselement, vorzugsweise ein Scherbolzen, eine Schwächungszone aufweist. Der Scherbolzen kann beispielsweise eine umlaufende Kerbe aufweisen, welche die Sollbruchstelle bildet.

Zur Aufnahme der am äußeren Endbereich des Messers angreifenden Scherbelastungen ist es von Vorteil, wenn das Sicherungselement an einem inneren Endbereich des Messers angeordnet ist. Die lösbare Verbindung zwischen dem Messer und dem Messerträger ist vorzugsweise zwischen dem Schneidabschnitt am äußeren Endbereich des Messers und der Angriffsstelle des Sicherungselements am inneren Endbereich des Messers angeordnet.

Hinsichtlich einer einfachen Bedienung ist es günstig, wenn das Sicherungselement an einem Hebelelement gelagert ist, mit welchem der Eingriff zwischen dem Sicherungselement und dem Messer werkzeuglos lösbar ist.

Hinsichtlich einer konstruktiv einfachen Ausführung, welche zudem eine komfortable Bedienung erlaubt, ist es günstig, wenn als Hebelelement ein einseitig am Messerträger fixiertes Federelement vorgesehen ist. Durch Aufbringung eines Biegemoments ist das Federelement derart verformbar, dass das Sicherungselement von seinem Sitz gehoben wird, wodurch der Eingriff zwischen dem Sicherungselement und dem Messer gelöst wird.

Gemäß einer besonders bevorzugten Ausführung weist das Messer zumindest zwei Schneidabschnitte auf, so dass vorteilhafterweise kein Austausch des Messers erforderlich wird, wenn einer der Schneidabschnitte beschädigt wird. Hierbei sind der eine Schneidabschnitt in einer Funktionsstellung und der andere Schneidabschnitt in einer Reservestellung derart angeordnet, dass durch Wenden bzw. Verschwenken des Messers der eine Schneidabschnitt an der Position des anderen Schneidabschnitts zu liegen kommt.

Diese Ausführung kann auch bei Schneidvorrichtungen ohne Luftspalt zwischen dem Messerträger und dem Messer zum Einsatz kommen.

Demnach betrifft die Erfindung auch eine Schneidvorrichtung für einen Rasenmäher, mit einem an eine Abtriebswelle eines Antriebs anschließbaren Messerträger, welcher an einem äußeren Ende einen Leitflügel aufweist, und mit einem Messer, welches an einem äußeren Endbereich einen Schneidabschnitt aufweist, wobei das Messer über eine lösbare Verbindung an dem Messerträger befestigt ist, **dadurch gekennzeichnet, dass** das Messer zumindest zwei Schneidabschnitte aufweist.

Die Betriebsdauer der Schneidvorrichtung kann wesentlich gesteigert werden, wenn die Längsseiten des Messers jeweils zumindest einen Schneidabschnitt aufweisen, wobei vorzugsweise genau zwei Schneidabschnitte an jeder Längsseite des Messers vorgesehen sind. Bei einer Ausführung mit genau zwei Schneidabschnitten ist es günstig, wenn die Schneidabschnitte diametral gegenüberliegend an den Längsseiten angeordnet sind, so dass der in der Reservestellung angeordnete Schneidabschnitt mittels Verschwenken des Messers um 180° senkrecht zur Längsachse des Messers in die Funktionsstellung gebracht werden kann. Andererseits können bei einer Ausführung mit vier Schneidabschnitten zwei Schneidabschnitte aus der Reservestellung in die Funktionsstellung gebracht werden, indem das Messer um 180° senkrecht zur Längsachse des Messers verschwenkt und das Messer zudem um die Längsachse des Messers gewendet wird. Die anderen beiden Schneidabschnitte können analog zur Ausführung mit zwei Schneidabschnitten durch Verschwenken des Messers senkrecht zur Längsachse des Messers zwischen der Reservestellung und der Funktionsstellung überführt werden.
Um das Messer gegenüber Scherkräften zu sichern, wenn das Messer zur Überführung eines in der Reservestellung angeordneten, unverbrauchten Schneidabschnitts in die Funktionsstellung gewendet wird, ist es von Vorteil, wenn das Messer an gegenüberliegenden Endbereichen jeweils eine Öffnung zum Durchtritt des Sicherungselements aufweist.

Zur Verringerung der Betriebsgeräusche ist es zudem günstig, wenn zwischen Kontaktflächen des Messers und des Messerträgers ein Dämmmaterial angeordnet ist. Das Dämmmaterial weist eine geringere Härte als das Material des Messerträgers bzw. des Messers auf, wodurch eine dämpfende Wirkung erzielt wird.

Zur Erzielung der dämpfenden Wirkung ist es günstig, wenn als Dämmmaterial eine Gummischicht vorgesehen ist.

Wenn der Leitflügel, vorzugsweise an einer Längskante des ersten Schenkels, einen Schneidbereich aufweist, kann auf einfache Weise ein Mulchmäher geschaffen werden. Hierbei wird das Schnittgut stark zerkleinert und gleichmäßig verteilt. Die Zerkleinerung und Verteilung des Schnittguts fördert eine rasche Verrottung des Schnittguts, welches daher nicht in einem Auswurf gesammelt werden muss, sondern auf der gemähten Fläche verbleiben kann.

Die Erfindung wird nachstehend anhand von in den Figuren dargestellten Ausführungsbeispielen, auf die sie jedoch nicht beschränkt sein soll, noch weiter erläutert. Im Einzelnen zeigt in der Zeichnung
Fig. 1 einen Rasenmäher mit einer erfindungsgemäßen Schneidvorrichtung, bei welcher zwischen Leitflügel und Messer ein Luftspalt gebildet ist;
Fig. 2 eine Seitenansicht einer ersten Ausführungsform der Schneidvorrichtung;
Fig. 3 eine vergrößerte Ansicht von Detail A in Fig. 2;
Fig. 4 eine Draufsicht der in Fig. 1, 2 dargestellten Schneidvorrichtung;
Fig. 5 eine Seitenansicht einer weiteren Ausführungsform der erfindungsgemäßen Schneidvorrichtung;
Fig. 6 eine vergrößerte Ansicht von Detail B in Fig. 5;
Fig. 7 eine Draufsicht der in Fig. 5, 6 dargestellten Schneidvorrichtung;
Fig. 8 eine Ansicht einer weiteren Ausführungsform der erfindungsgemäßen Schneidvorrichtung im Bereich eines Sicherungselements; und
Fig. 9 einen Schnitt entlang der Linie A-A in Fig. 2.

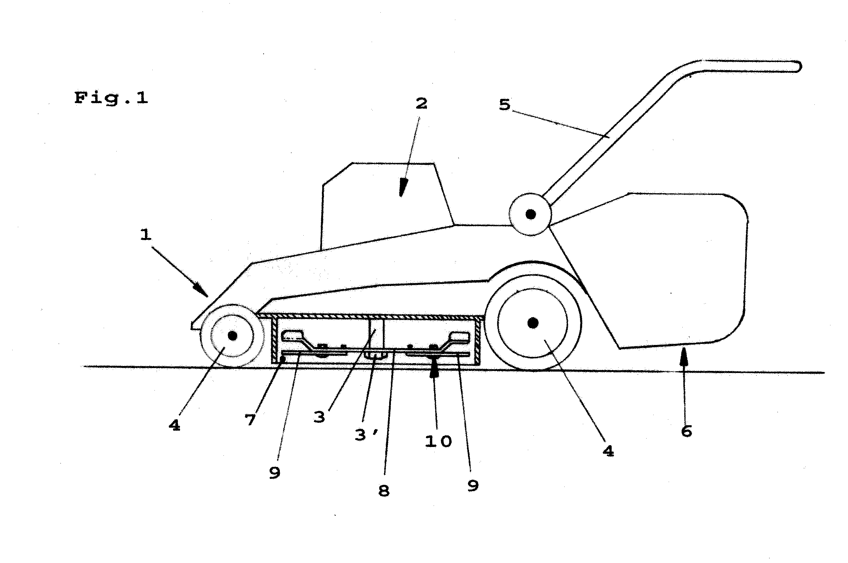

Fig. 1 zeigt einen Rasenmäher 1, welcher in der gezeigten Ausführung als Sichelmäher ausgebildet ist. Der Rasenmäher 1 weist einen Antrieb 2, beispielsweise einen Benzinmotor oder einen Elektroantrieb, auf, mit welchem eine Abtriebswelle 3 in Rotation versetzt wird. Darüber hinaus weist der Rasenmäher 1 einen an sich herkömmlichen Aufbau mit Rädern 4, einem Lenker 5 und einem Auswurfbehälter 6 auf, in welchem das Mähgut gesammelt wird.

Wie aus Fig. 1 bis 4 weiters ersichtlich, weist der Rasenmäher 1 zudem eine Schneidvorrichtung 7 auf, welche einen mit der Abtriebswelle 3 des Antriebs 2 koppelbaren Messerträger 8 aufweist. Die Abtriebswelle 3 ist hierbei über eine Verschraubung 3' mit dem Messerträger 8 drehfest verbunden. Der Messerträger 8 trägt an den äußeren Enden Messer 9, welche jeweils über eine lösbare Verbindung 10, in der gezeigten Ausführung eine Schraubverbindung, an dem Messerträger 8 befestigt sind. Die Messer 9 weisen an den äußeren Enden Schneiden bzw. Schneidabschnitte 11 auf, mit welchen das Gras geschnitten wird. An den äußeren Enden des Messerträgers 8 sind Leitflügel 12 gebildet, mit welchen das abgeschnittene Gras in Richtung des Auswurfbehälters 6 transportiert wird.

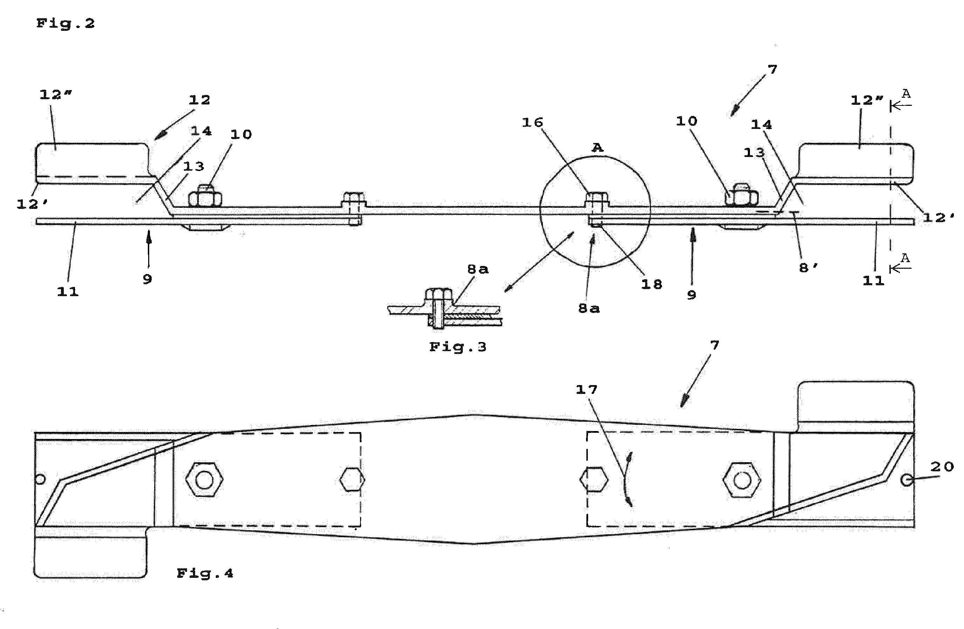

Wie aus Fig. 1 bis 4 weiters ersichtlich, weist der Messerträger 8 einen von der Längsebene 8' des Messerträgers 8 (vgl. Fig. 2) abgebogenen Übergangsbereich 13 auf, welcher in radialer Richtung nach außen in den Leitflügel 12 und in radialer Richtung nach innen in den mit der Abtriebswelle 3 gekoppelten Abschnitt des Messerträgers 8 übergeht. Zwischen dem Leitflügel 12 des Messerträgers 8 und dem Schneidabschnitt 11 des Messers 9 ist ein Luftspalt 14 gebildet, welcher eine Beruhigung der Luftschichten um den Schneidabschnitt 11 bewirkt. Die Luftströmung im Luftspalt 14 trägt das mit Hilfe des Schneidabschnitts 11 abgeschnittene Mähgut über die vom Luftspalt 14 abgewandte Oberseite des ersten Schenkels 12' zum zweiten Schenkel 12" des Leitflügels 12, mit welchem das Mähgut in den Auswurfbehälter 6 abgeführt wird.

Wie aus Fig. 1 bis 4 weiters ersichtlich, weist der Leitflügel 12 des Messerträgers 8 einen den Luftspalt 14, bezogen auf die Betriebsstellung nach unten, begrenzenden ersten Schenkel 12' auf, welcher sich parallel zum Schneidabschnitt 11 des Messers 9 erstreckt. Zudem weist der Leitflügel 12 einen schräg von dem ersten Schenkel 12' hochstehenden zweiten Schenkel 12" auf, welcher in einem Neigungswinkel von ca. 120° zum ersten Schenkel 14 angeordnet ist. Der zweite Schenkel 12" des Leitflügels 12 ist hierbei im Wesentlichen parallel zur Längsachse 8' des Messerträgers 8 angeordnet.

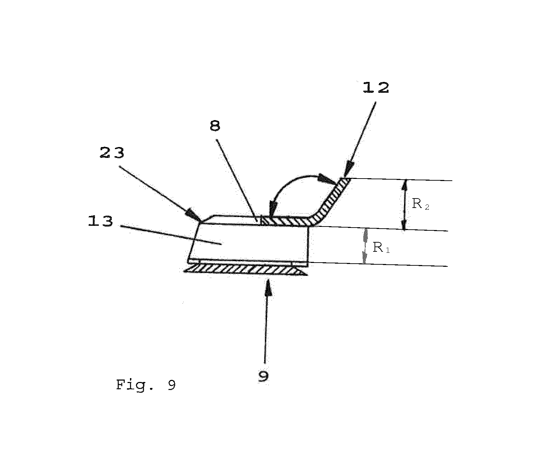

In einer bevorzugten Ausführung, vgl. Fig. 9, beträgt die Höhe h₁ des Luftspalts 14 zwischen dem Leitflügel 12 des Messerträgers 8 und dem Schneidabschnitt 11 des Messers 9 im Wesentlichen 10 mm. Darüber hinaus weist der Luftspalt 13 eine Erstreckung in Längsrichtung 8' des Messerträgers 8 von ca. 50 mm auf. Die Erstreckung h₂ des zweiten Schenkels 12" des Leitflügels 12 senkrecht zur Längsebene des ersten Schenkels 12' beträgt beispielsweise ca. 12 mm.

Wie aus Fig. 1 bis 4 weiters ersichtlich, weist die Schneidvorrichtung 7 zudem ein Sicherungselement 16 auf, welches durch den Messerträger 8 und das Messer 9 ragt. Das Sicherungselement 16 weist eine definierte Bruchgrenze auf. Wenn die vorgegebene Scherbelastung überschritten wird, beispielsweise bei einer Kollision des Messers 9 mit einem harten Gegenstand, bricht das Sicherungselement 16, wodurch eine Verschwenkung des Messers 9 relativ zum Messerträger 8 in eine Pfeilrichtung 17 senkrecht zur Längsebene des Messers 9 freigegeben wird (vgl. Fig. 4). Das Sicherungselement 16 ist in der gezeigten Ausführung an einem inneren Endbereich des Messers 9 gegenüberliegend vom Schneidabschnitt 11 angeordnet.

Wie aus Fig. 1 bis 4 weiters ersichtlich, ist das Sicherungselement 16 in dieser Ausführung durch einen Scherbolzen 18 gebildet, welcher mit dem Messerträger 8 verschraubt ist.

Wie aus Fig. 1 bis 4 weiters ersichtlich, weist jedes Messer 9 mehr als einen Schneidabschnitt 11 auf. In der gezeigten Ausführung sind an jeder Längsseite des Messers 9 genau zwei Schneidabschnitte 11 vorgesehen. Hierbei ist ein Schneidabschnitt 11' in einer Funktionsstellung zum Schneiden des Grases angeordnet, während die übrigen Schneidabschnitte 11" jeweils in einer Reservestellung angeordnet sind. Durch Wenden bzw. Verschwenken des Messers im entsicherten Zustand des Sicherungselements 16 kann einer der Schneidabschnitte 11" von der Reservestellung in die Funktionsstellung gebracht werden, wenn die Schneide des Schneidabschnitts 11' abgenutzt ist. Hiermit kann die Betriebsdauer der Schneidvorrichtung 7 verlängert werden. Zudem sind die Schneidabschnitte 11 völlig gleichartig ausgestaltet, so dass vorteilhafterweise das Auftreten einer Unwucht beim Austausch der Schneide vermieden wird.

Wie aus Fig. 1 bis 4 weiters ersichtlich, weist das Messer 9 an beiden äußeren Endbereichen jeweils eine Öffnung 20 zum Durchtritt des Sicherungselements 16 auf, so dass auch ein von der Funktionsstellung in die Reservestellung überführter Schneidabschnitt 11 mit Hilfe des Sicherungselements 16 gesichert werden kann.

Wie aus Fig. 1 bis 4 weiters ersichtlich, ist zwischen den aufeinanderliegenden Kontaktflächen des Messers 9 bzw. des Messerträgers 8 jeweils ein Dämmmaterial 21 angeordnet, welches in der gezeigten Ausführung durch eine Gummischicht 22 gebildet ist. Hiermit können vorteilhafterweise die Betriebsgeräusche reduziert werden. Die Gummischicht 22 erstreckt sich hierbei insbesondere im Bereich der lösbaren Verbindung 10 sowie im Bereich des Sicherungselements 16.

Wie aus Fig. 1 bis 4 weiters ersichtlich, weist der Leitflügel 12 an einer Längskante des ersten Schenkels 12' einen Schneidbereich 23 auf, mit welchem eine Mulchfunktion erzielt wird. In diesem Fall kann die Auswurföffnung zum Auswurfbehälter 6 geschlossen werden.

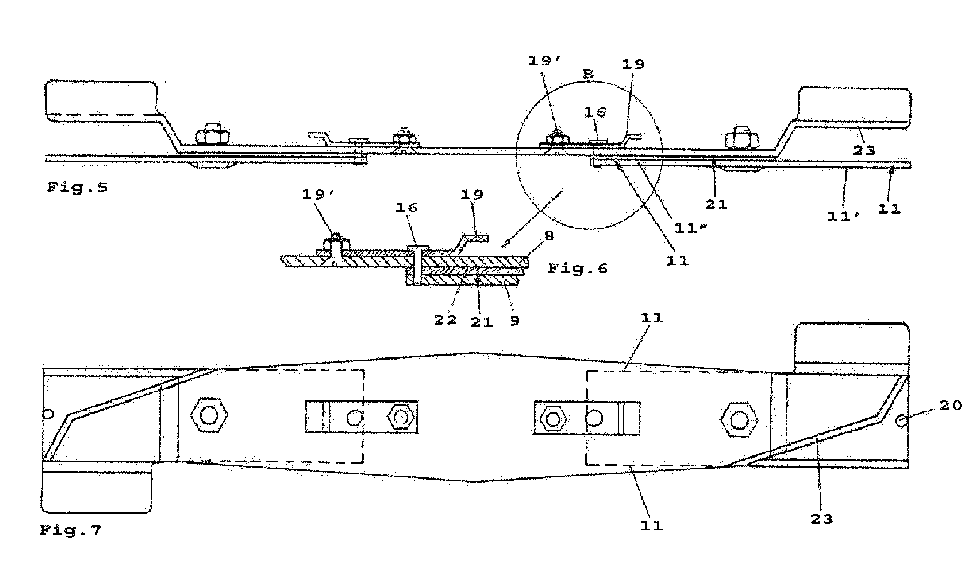

Die Ausführung der Fig. 5 bis 7 unterscheidet sich dadurch von jener der Fig. 1 bis 4, dass das Sicherungselement 16 an einem Hebelelement 19 gelagert ist, mit welchem der Eingriff zwischen dem Sicherungselement 16 und dem Messer 9 werkzeuglos lösbar ist. Als Hebelelement 19 ist hierbei ein elastisch verformbares Federelement vorgesehen, welches über eine Verschraubung 19' einseitig am Messerträger 8 fixiert ist. Das Hebelelement 19 kann vom Bediener hintergriffen und aufgebogen werden, um das Sicherungselement 16 aus dem Messer 9 zu heben.

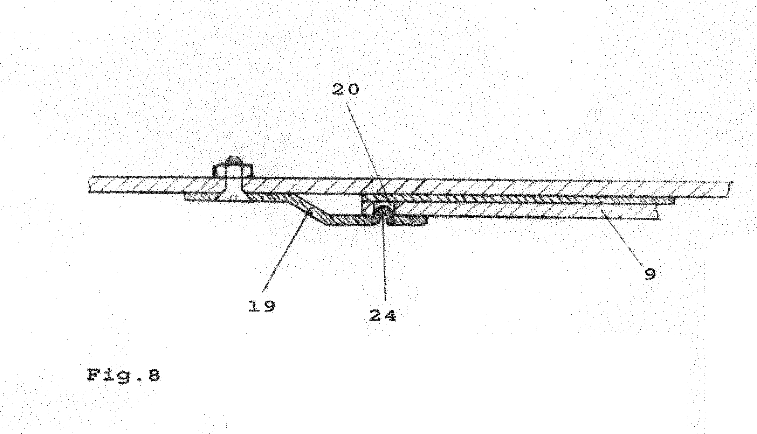

In Fig. 8 ist eine weitere Ausführung der Schneidvorrichtung 7 gezeigt, welche sich hinsichtlich des Sicherungselements 16 von den vorangehenden Ausführungen unterscheidet. Hierbei weist das Sicherungselement 16 eine Rastnase 24 auf, welche in die Öffnung 20 am inneren Endbereich des Messers 9 eingreift. Die Rastnase 24 ist hierbei am freien Ende eines Hebelelements 19 in Form eines einseitig gelagerten Federelements gebildet. Zur Entsicherung des Messers 9, insbesondere zum Wechseln zwischen Funktions- und Reservestellung der Schneidabschnitte 11, wird das Federelement aufgebogen, so dass das Messer 9 aus dem Eingriff der Rastnase 24 gelöst wird.

## Patentansprüche

1. Schneidvorrichtung (7) für einen Rasenmäher (1), mit einem an eine Abtriebswelle (3) eines Antriebs (2) anschließbaren Messerträger (8), welcher an einem äußeren Ende einen Leitflügel (12) aufweist, und mit einem Messer (9), welches an einem äußeren Endbereich einen Schneidabschnitt (1; 11', 11"1) aufweist, wobei das Messer (9) über eine lösbare Verbindung (10) an dem Messerträger (8) befestigt ist, **dadurch gekennzeichnet, dass** der Messerträger (8) einen von der Längsebene des Messerträgers (8) abgewinkelten, mit dem Leitflügel (12) verbundenen Übergangsbereich (13) aufweist und/oder das Messer (9) einen von der Längsebene des Messers (9) abgewinkelten, mit dem Schneidabschnitt (11; 11', 11") verbundenen Übergangsbereich (13) aufweist, wobei jeweils zwischen dem Leitflügel (12) des Messerträgers (8) und dem Schneidabschnitt (11; 11', 11") des Messers (9) ein Luftspalt (14) gebildet ist.

2. Schneidvorrichtung (7) nach Anspruch 1, **dadurch gekennzeichnet, dass** der Leitflügel (12) des Messerträgers (8) einen den Luftspalt (14) nach unten begrenzenden ersten Schenkel (12') aufweist, welcher sich vorzugsweise im Wesentlichen parallel zum Schneidabschnitt (11) des Messers (9) erstreckt, wobei der Leitflügel (12) einen von dem den Luftspalt (14) nach unten begrenzenden ersten Schenkel (12') hochstehenden zweiten Schenkel (12") aufweist.

3. Schneidvorrichtung (7) nach Anspruch 1 oder 2, **dadurch gekennzeichnet, dass** die Höhe (h₁) des Luftspalts (14) zwischen dem Leitflügel (12) des Messerträgers (8) und dem Schneidabschnitt (11) des Messers (9) mindestens 4 mm, vorzugsweise zwischen 4 mm und 16 mm, insbesondere im Wesentlichen 10 mm, beträgt, wobei die Erstreckung des Luftspalts (14) in Längsrichtung (8') des Messerträgers (8) vorzugsweise zwischen 30 mm und 60 mm, insbesondere im Wesentlichen 50 mm, beträgt.

4. Schneidvorrichtung (7) nach Anspruch 2 oder 3, **dadurch gekennzeichnet, dass** der zweite Schenkel (12") des Leitflügels (12) in einem Neigungswinkel (α) von zwischen 100° und 140°, insbesondere von im Wesentlichen 120°, zum ersten Schenkel (12') angeordnet ist.

5. Schneidvorrichtung (7) nach Anspruch 4, **dadurch gekennzeichnet, dass** der zweite Schenkel (12") des Leitflügels (12) im Wesentlichen parallel zur Längsachse (8') des Messerträgers (8) angeordnet ist.

6. Schneidvorrichtung (7) nach Anspruch 4 oder 5, **dadurch gekennzeichnet, dass** der zweite Schenkel (12") des Leitflügels (12) eine Erstreckung (h₂) senkrecht zur Längsebene des Messerträgers (8) von weniger als 20 mm, vorzugsweise zwischen 4 mm und 20 mm, insbesondere im Wesentlichen 12 mm, aufweist.

7. Schneidvorrichtung (7) nach einem der Ansprüche 1 bis 6, **dadurch gekennzeichnet, dass** die lösbare Verbindung (10) zwischen dem Messerträger (8) und dem Messer (9) eine Schraubverbindung aufweist.

8. Schneidvorrichtung (7) nach einem der Ansprüche 1 bis 7, **dadurch gekennzeichnet, dass** ein den Messerträger (8) und das Messer (9) durchsetzendes, bei einer definierten Scherbelastung brechendes Sicherungselement (16) vorgesehen ist, so dass das Messer (9) unter der Scherbelastung relativ zum Messerträger (8) verschwenkbar ist, wobei das Sicherungselement (16), vorzugsweise ein Scherbolzen (18), bevorzugt eine Schwächungszone aufweist.

9. Schneidvorrichtung (7) nach Anspruch 8, **dadurch gekennzeichnet, dass** das Sicherungselement (16) an einem inneren Endbereich des Messers (9) angeordnet ist.

10. Schneidvorrichtung (7) nach Anspruch 8 oder 9, **dadurch gekennzeichnet, dass** das Sicherungselement (16) an einem Hebelelement (19) gelagert ist, mit welchem der Eingriff zwischen dem Sicherungselement (16) und dem Messer (9) werkzeuglos lösbar ist, wobei als Hebelelement (19) bevorzugt ein einseitig am Messerträger (8) fixiertes Federelement vorgesehen ist.

11. Schneidvorrichtung (7) nach einem der Ansprüche 1 bis 10, **dadurch gekennzeichnet, dass** das Messer (9) zumindest zwei Schneidabschnitte (11; 11', 11") aufweist, wobei bevorzugt die Längsseiten des Messers (9) jeweils zumindest einen Schneidabschnitt (11; 11', 11") aufweisen, wobei insbesondere genau zwei Schneidabschnitte (11; 11', 11") an jeder Längsseite des Messers (9) vorgesehen sind.

12. Schneidvorrichtung (7) nach einem der Ansprüche 8 bis 11, **dadurch gekennzeichnet, dass** das Messer (9) an den gegenüberliegenden Endbereichen jeweils eine Öffnung (20) zum Durchtritt des Sicherungselements (16) aufweist.

13. Schneidvorrichtung (7) nach einem der Ansprüche 1 bis 12, **dadurch gekennzeichnet, dass** zwischen den Kontaktflächen des Messers (9) und des Messerträgers (8) ein Dämmmaterial (21) angeordnet ist, wobei als Dämmmaterial (21) bevorzugt eine Gummischicht (22) vorgesehen ist.

14. Schneidvorrichtung (7) nach einem der Ansprüche 1 bis 13, **dadurch gekennzeichnet, dass** der Leitflügel (12), vorzugsweise an einer Längskante des ersten Schenkels (12'), einen Schneidbereich (23) aufweist.

15. Rasenmäher (1) mit einer an eine Abtriebswelle (3) eines Antriebs (2) angeschlossenen Schneidvorrichtung (7), **dadurch gekennzeichnet, dass** die Schneidvorrichtung (7) nach einem der Ansprüche 1 bis 14 ausgebildet ist.
